# EUROPÄISCHE PATENTSCHRIFT

(11) **EP 1 040 978 B1**
(45) Veröffentlichungstag und Bekanntmachung des Hinweises auf die Patenterteilung: **26.02.2003**
(21) Anmeldenummer: 00105788.4
(22) Anmeldetag: 18.03.2000
(51) Int. Cl.: B61D 17/04, B61D 17/10, B62D 21/08

(54) **Tragstruktur mit wenigstens zwei sich kreuzenden Profilteilen, insbesondere für Untergestelle und Aufbauten von Schienenfahrzeugen**
Supporting structure with at least two crossing longitudinal sections, especially for underframes and superstructures of rail vehicles
Structure de support comportant au moins deux profilés en croix, en particulier pour châssis et superstructures de véhicules ferroviaires

(30) Priorität: 29.03.1999 DE 19914164
(43) Veröffentlichungstag der Anmeldung: 04.10.2000
(73) Patentinhaber: ALSTOM LHB GmbH, 38239 Salzgitter (DE)
(72) Erfinder: Grüning, Hans, 38259 Salzgitter (DE); Hohenstein, Michael, 38226 Salzgitter (DE)

(56) Entgegenhaltungen:
- DE-A- 3 906 628
- DE-A- 19 609 722
- DE-C- 812 756
- DE-C- 843 503
- DE-C- 19 612 342
- US-A- 2 878 761
- US-A- 3 626 464

## Beschreibung

Die Erfindung betrifft eine Tragstruktur mit wenigstens zwei sich kreuzenden Profilteilen, insbesondere für Untergestelle und Aufbauten von Schienenfahrzeugen, mit den im Oberbegriff des Anspruchs 1 genannten Merkmalen.

Es ist bekannt, Tragstrukturen aus wenigstens zwei sich kreuzenden Profilteilen herzustellen. Solche Profilteile bestehen üblicherweise aus einem Steg, der wenigstens einen entlang einer Biegelinie aus einer Ebene des Steges abgewinkelten Gurt aufweist. Im Bereich wenigstens einer Kreuzungsstelle der Profilteile weisen diese korrespondierende Ausnehmungen auf, die einen Aufbau einer Steckverbindung der Profilteile zu einer Tragstruktur ermöglichen.

Derartige Tragstrukturen werden üblicherweise an ihrer Ober- und/oder Unterseite, beispielsweise durch Kleben oder Schweißen, mit Flächenelementen gefügt. Ein Flächenelement auf der Oberseite kann beispielsweise als Fußbodenelement eines Wagenkastens eines Schienenfahrzeuges dienen. Die Tragstruktur soll im wesentlichen eine Last aus seinem Eigengewicht, den Aufbauten und einer Zuladung abstützen.

Aus der DE 197 21 267 A1 ist eine Tragstruktur bekannt, bei der die beiden Profilteile jeweils zwei entlang zweier Biegelinien aus der Ebene des Steges abgewinkelte Gurte aufweisen. Auch hier wird durch ein Ineinanderstecken der korrespondierenden Ausnehmungen die Steckverbindung der Profilteile zu der Tragstruktur erstellt. Die Ausnehmungen und eine Breite der Gurte werden dabei derart aufeinander abgestimmt, daß sich lediglich zwei schmale Spalten zwischen den beiden Gurten der Profilteile ergeben. Da es notwendig ist, eine Steifigkeit der Tragstruktur zu erhöhen, wird im Bereich dieser Spalten durch Schweiß-, Löt- oder Klebeverfahren die Steckverbindung gefügt.

Nachteilig dabei ist, daß auf der einen Seite, auf der der Gurt entlang eines Radius von dem Steg abgewinkelt ist, der Spalt eine für ein Fügeverfahren ungünstige Ausgestaltung besitzt. So ist es notwendig, aufgrund eines größeren Spaltmaßes das Fügen beispielsweise durch Handschweißung durchzuführen. Neben einem erhöhten Zeitaufwand gegenüber automatisierten Fügeverfahren ist zudem nachteilig, daß der aufgrund des Radius vorhandene Spalt durch einen Zusatzwerkstoff aufgefüllt werden muß. Dies führt einerseits zu einer Gewichtszunahme der Tragstruktur und andererseits zu erhöhten Materialkosten. Weiterhin ist nachteilig, daß Fügeverfahren, wie die Handschweißung mit einem Zusatzwerkstoff, häufig zu Verspannungen im Bereich der Steckverbindung führen, die eine Rißbildung unterstützen können.

Der Erfindung liegt die Aufgabe zugrunde, eine Tragstruktur zur Verfügung zu stellen, bei der die Steckverbindung der Profilteile auch in einem Übergangsbereich des Steges in den Gurt durch ein Fügeverfahren ohne Zusatzwerkstoffe ermöglicht wird.

Erfindungsgemäß wird diese Aufgabe durch eine Tragstruktur mit den Merkmalen des Anspruchs 1 gelöst. Indem an der wenigstens einen Kreuzungsstelle im Übergangsbereich vom Steg zu dem wenigstens einen Gurt eines ersten Profilteils zur Ausbildung einer Nase eine Ausnehmung ausgebildet ist, wobei ein vorderes Ende der Nase sich zumindest bereichsweise parallel zu einer Fügekante eines Gurtes eines zweiten Profilteils erstreckt, ist es möglich, automatisierte Fügeverfahren, wie beispielsweise Laserschweißen, einzusetzen. Auf diese Weise können zum einen die bei einer Verwendung herkömmlicher Fügeverfahren auftretenden Verspannungen vermieden werden und zum anderen werden die Materialkosten und das Gewicht reduziert, da keine Zusatzwerkstoffe notwendig sind.

In einer bevorzugten Ausführungsform besitzen die Profilteile zwei entlang zweier Biegelinien aus der Ebene des Steges abgewinkelte Gurte und damit eine im Querschnitt Z- oder U-förmige Ausgestaltung. Wenigstens ein Profilteil weist dabei die zusätzliche Ausnehmung zur Ausbildung der Nase auf. Es ist jedoch auch möglich, beide Profilteile mit einer identischen Ausgestaltung des Bereichs der Steckverbindung einzusetzen, so daß nach dem Ineinanderstecken der beiden Profilteile an der Ober- und/oder Unterseite der Tragstruktur ein automatisiertes Fügeverfahren eingesetzt werden kann. Auf diese Weise kann einerseits eine Herstellung der Profilteile vereinheitlicht werden und damit kostengünstiger gestaltet werden und andererseits die Steifigkeit der Tragstruktur erhöht werden.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine Draufsicht auf eine Tragstruktur;
- Figur 2: ein erstes und ein zweites Profilteil einer Tragstruktur;
- Figur 3a und 3b: Seitenansichten auf ein Z-förmiges Profilteil;
- Figur 4: ein Flachwerkstück zur Herstellung von Z-förmigen Profilteilen;
- Figur 5: zwei Z-förmige Profilteile vor einem Ineinanderstecken;
- Figur 6: zwei Z-förmige Profilteile im Bereich einer Kreuzungsstelle nach einem Ineinanderstecken;
- Figur 7: eine schematische Schnittansicht im Bereich einer Kreuzungsstelle und
- Figur 8: ein weiteres Ausführungsbeispiel für Profilteile einer Tragstruktur.

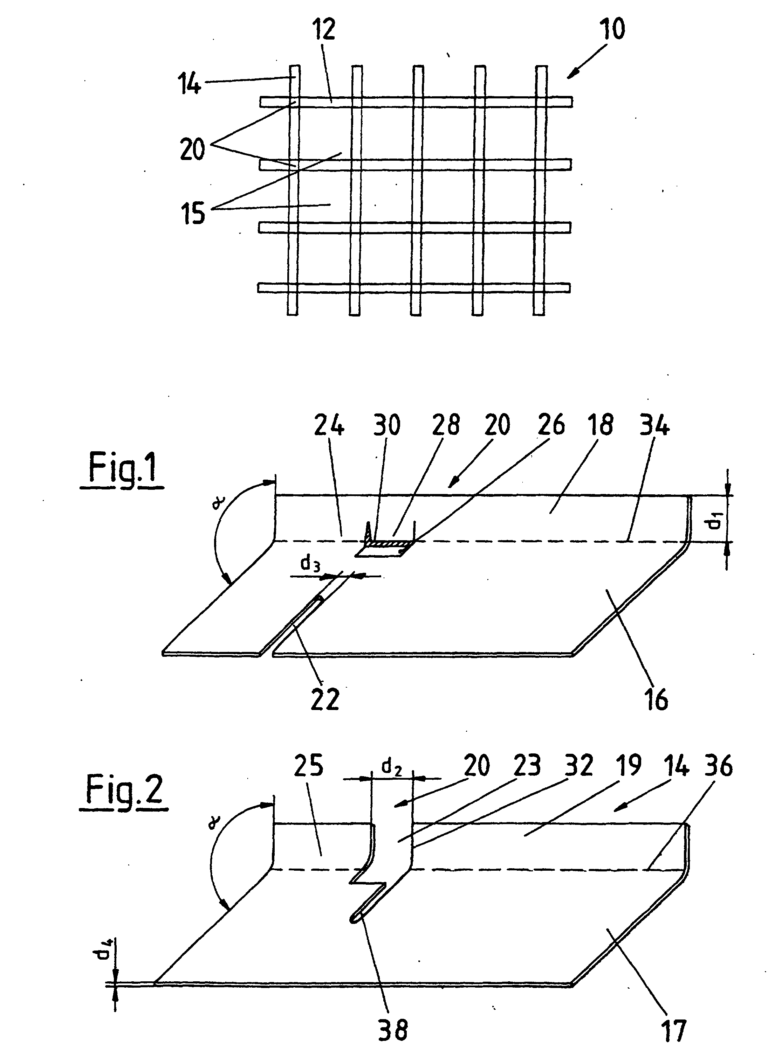

Die Figur 1 zeigt in einer schematischen Draufsicht eine Tragstruktur 10, wie sie insbesondere für Untergestelle und Aufbauten von Schienenfahrzeugen genutzt wird. Die Tragstruktur 10 besteht dabei aus sich kreuzenden Profilteilen 12, 14, die im Bereich einer Kreuzungsstelle 20 eine Steckverbindung der Profilteile 12, 14 zu der Tragstruktur 10 ausbilden. Durch eine Mehrfachanordnung ergibt sich eine gitterartige Struktur mit im wesentlichen rechteckförmigen Aussparungen 15 zwischen den einzelnen Profilteilen 12, 14.

Zur Erhöhung einer Steifigkeit einer solchen Tragstruktur 10 müssen die Profilteile 12, 14 im Bereich der Kreuzungsstelle 20 miteinander durch Klebe-, Lötoder Schweißverfahren gefügt werden. Auf einer Ober- oder Unterseite der Tragstruktur 10 können dann anschließend Flächenelemente, wie beispielsweise Fußbodenplatten, montiert werden. Die Tragstruktur 10 dient im wesentlichen dazu, die Last aus einem Eigengewicht, der Aufbauten und einer Zuladung abzustützen.
Die Figur 2 zeigt ein erstes Profilteil 12 und ein zweites Profilteil 14, die durch Ineinanderstecken die Steckverbindung ausbilden und insgesamt die Tragstruktur 10 ergeben. Die Profilteile 12, 14 besitzen einen Steg 16, 17 und einen entlang einer Biegelinie 34, 36 aus einer Ebene des Steges 16, 17 abgewinkelten Gurt 18, 19. Ein Winkel des Radius in einem Übergangsbereich 24, 25 vor dem Steg 16, 17 in den Gurt 18, 19 beträgt üblicherweise → = 90°.

Das erste Profilteil 12 weist ferner eine schlitzartige Ausnehmung 22 im Bereich des Steges 16 auf und eine weitere Ausnehmung 26 im Übergangsbereich 24. Der Gurt 18 bildet oberhalb der Ausnehmung 26 eine Nase 28 aus, wobei ein vorderes Ende 30 der Nase 28 im wesentlichen in einer Ebene des Gurtes 18 liegt, also nicht eine Krümmung aufweist, wie sie im Übergangsbereich 24 auftritt.

Das zweite Profilteil 14 besitzt eine im wesentlichen rechteckförmige Ausnehmung 23, die sich ausgehend von dem Gurt 19 über den Übergangsbereich 25 bis in den Steg 17 erstreckt. Dabei verjüngt sich die Ausnehmung 23 entlang einer Fügekante 32 in einen Schlitz 38. Eine Breite d2 der Ausnehmung 23 im Bereich des Gurtes 19 entspricht dabei in seinen Abmessungen einer Breite d1 des Gurtes 18 des ersten Profilteiles 12. Weiterhin muß die Ausnehmung 22 des Profilteils 12 derart ausgelegt sein, daß ihre Breite d3 mindestens einer Materialdicke d4 des zweiten Profilteils 14 entspricht.

Werden die beiden Profilteile 12, 14 um 90° versetzt im Bereich der Ausnehmungen 22, 23 ineinander gesteckt, so bilden sie die Steckverbindungen aus, die die einzelnen Profilteile 12, 14 insgesamt zu der Tragstruktur 10 verbinden.

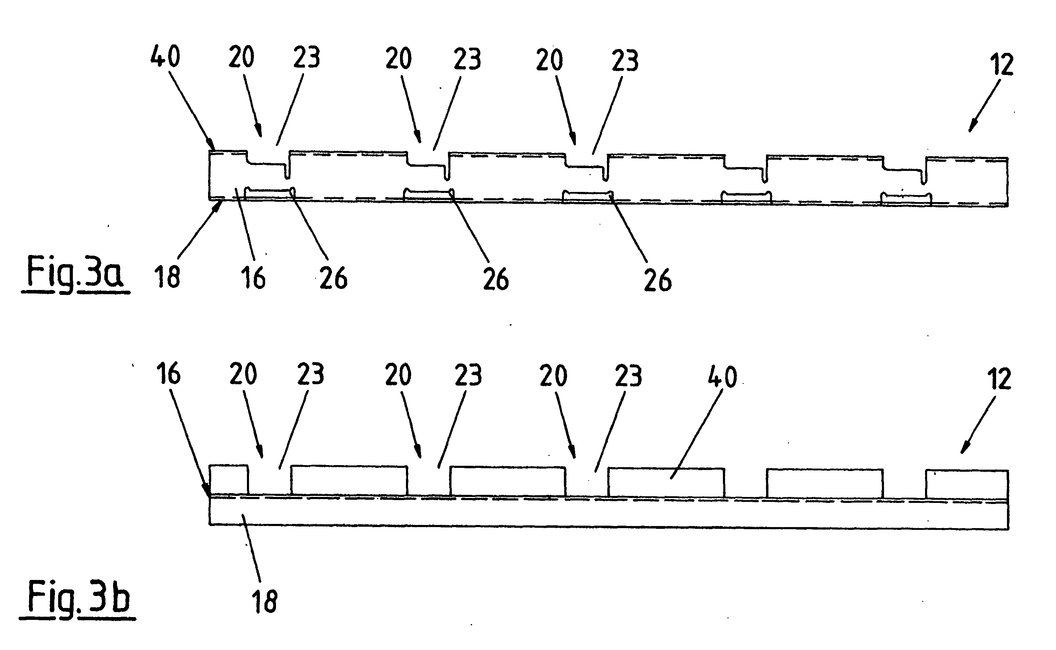

Die Figuren 3a und 3b zeigen zwei Seitenansichten einer alternativen Ausführungsform des Profilteils 12. Neben dem Gurt 18 besitzt das Profilteil 12 einen weiteren aus der Ebene des Steges 16 abgewinkelten Gurt 40 und hat somit einen Z-förmigen Querschnitt. Deutlich wird die Möglichkeit einer Mehrfachanordnung der Ausnehmungen 23, 26 vorzunehmen, so daß ein Profilteil 12 mehrere Kreuzungsstellen 20 besitzen kann. Die Ausgestaltung des Profilteils 12 im Bereich des zweiten Gurtes 40 (Figur 3b) entspricht im wesentlichen der Ausgestaltung des zweiten Profilteils 14 und die einzelnen Elemente, die in diesem Bereich angeordnet sind, tragen daher gleiche Bezugszeichen. Ausgehend von wenigstens zwei der hier dargestellten Z-förmigen Profilteile 12 kann die Tragstruktur 10 montiert werden, das heißt, das erste und das zweite Profilteil 12, 14 sind dann gleichartig ausgestaltet.

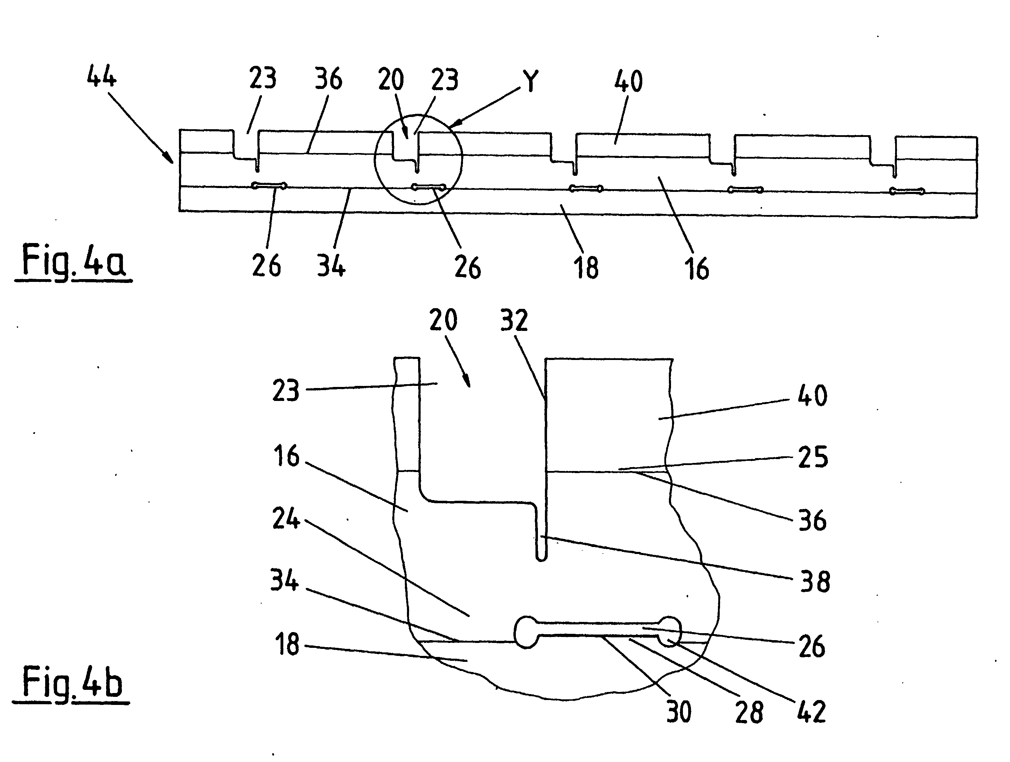

Eine Herstellung von Z-förmigen Profilteilen 12 soll anhand der Figur 4 erläutert werden. Die Figur 4 zeigt dabei ein Flachwerkstück 44, in das durch geeignete Stanz- oder Schneidwerkzeuge die Ausnehmungen 22, 26 strukturiert werden. Entlang der Biegelinien 34, 36 werden anschließend die Gurte 40, 18 aus der Ebene des Stegs 16 abgewinkelt.

Der Bereich der Kreuzungsstelle 20 ist zur Verdeutlichung vergrößert dargestellt. Die für die Steckverbindung notwendige Ausnehmung 23 erstreckt sich über den Gurt 40 über den Übergangsbereich 25 in den Steg 16 und verjüngt sich dort zu dem Schlitz 38. Auf einer gegenüberliegenden Seite des Steges 16 befindet sich die Aussparung 26. Die Aussparung 26 ist dabei derart in Längsrichtung des Steges 16 angeordnet, daß sie sich hier, ausgehend von etwa der Höhe der Fügekante 32, entgegengesetzt der Aussparung 23 erstreckt.

Die Ausnehmung 26 ist im wesentlichen hantelförmig mit zwei endseitigen, vorzugsweise kreisrunden Erweiterungen 42 ausgebildet. Die Erweiterungen 42 dienen dazu, während eines Biegevorgangs entlang der Biegelinie 34 im Übergangsbereich 24 Spannungen zu vermeiden, durch die die Nase 28, insbesondere der vordere Teil 30, mit gebogen wird.

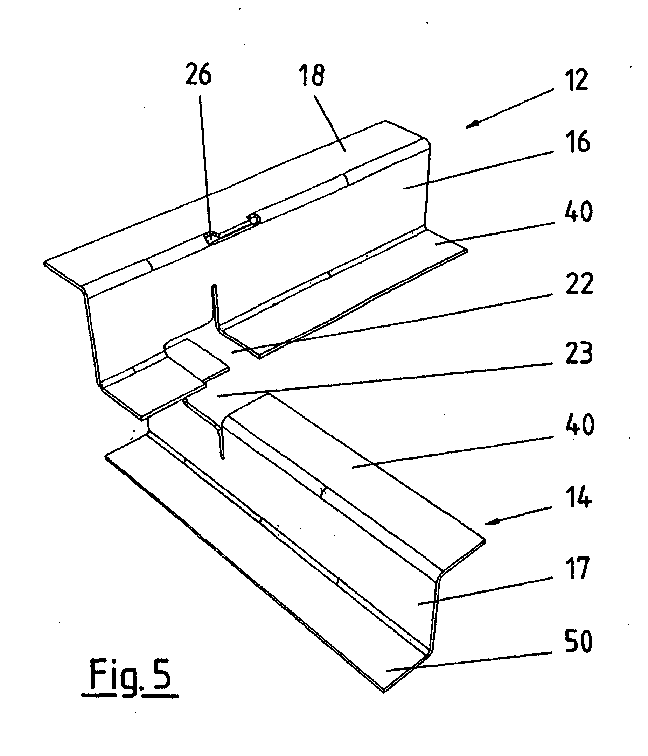

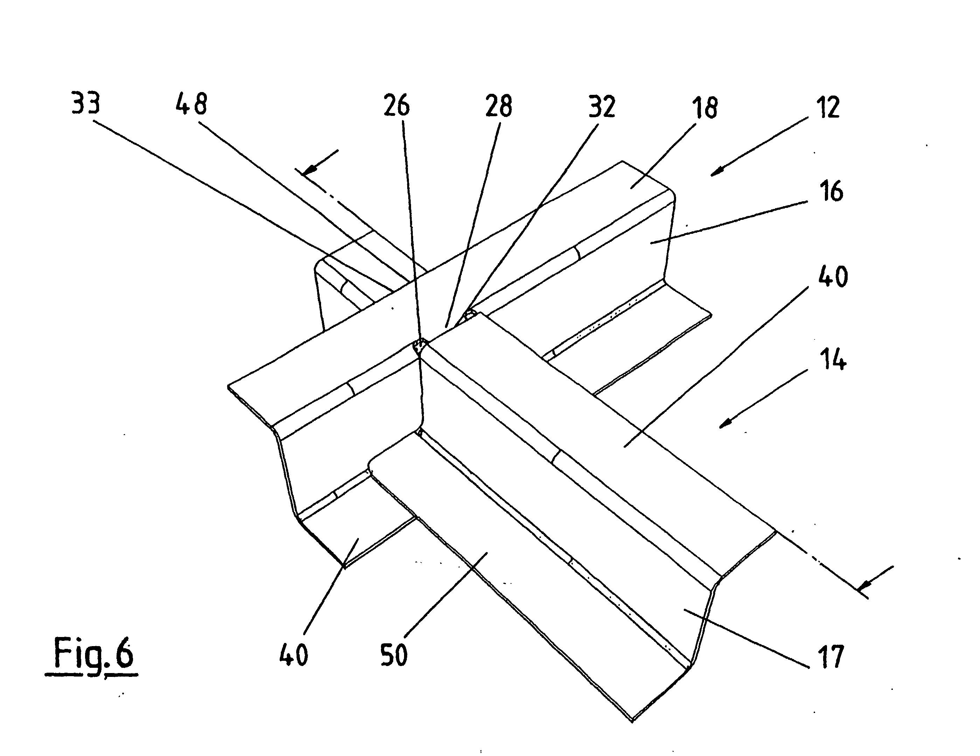

Die Figuren 5 und 6 zeigen zwei Profilteile 12, 14 vor und nach dem Ineinanderstecken zur Ausbildung der Steckverbindung. Wie aus Figur 5 ersichtlich wird, muß dazu das erste Profilteil 12 in einem Winkel von 90° auf das zweite Profilteil 14 gesetzt werden und zwar im Bereich der korrespondierenden Ausnehmungen 22, 23. Gemäß Figur 6 liegt anschließend die Fügekante 32 des zweiten Profilteils 14 an der Nase 28 des ersten Profilteils 12. Ferner liegen auch die Stege 16, 17 formschlüssig aneinander, so daß die entstehende Tragstruktur 10 insgesamt eine hohe Steifigkeit aufweist. Die Profilteile 12, 14 werden anschließend durch ein geeignetes Klebe-, Löt- oder Schweißverfahren miteinander gefügt.

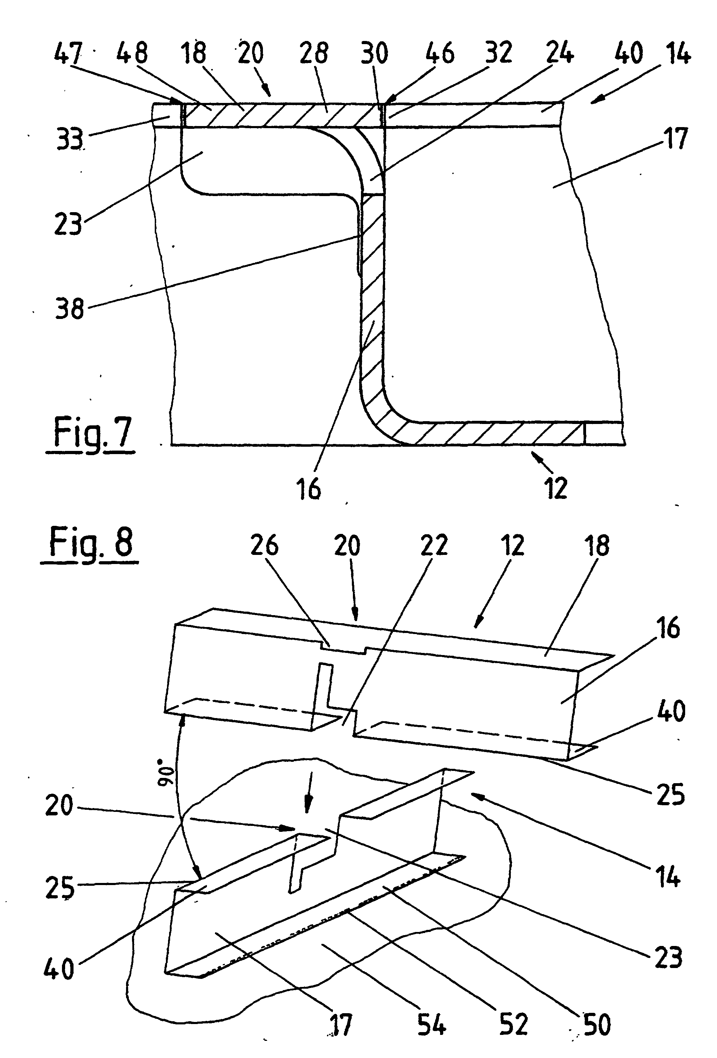

Die Figur 7 zeigt eine Schnittansicht durch die Kreuzungsstelle 20 der Steckverbindung zweier Z-förmiger Profilteile 12, 14. Der Schnitt läuft entlang der Ebene des Steges 17 des zweiten Profilteils 14. Deutlich wird, daß die Nase 28 mit ihrem vorderen Ende 30 wenigstens bereichsweise parallel zu der Fügekante 32 des Gurtes 40 verläuft. Somit ist eine Abmessung eines Spaltes 46, der sich zwischen der Fügekante 32 und der Nase 28 befindet, sehr gering gehalten. Ein äußeres Ende 48 des Gurtes 18 liegt an einer weiteren Fügekante 33, wobei sich zwischen der Fügekante 33 und dem äußeren Ende 48 ein Spalt 47 erstreckt.

Da die Abmessungen der Spalte 46, 47 sehr gering gehalten sind, kann das Fügen mittels Laserschweißen durchgeführt werden. Die Anwendung des Laserschweißens bietet zahlreiche Vorteile. So ist eine Automatisierung des Fügeverfahrens möglich. Das Laserschweißen liefert eine sehr schmale Schweißnaht, die einen günstigen Kraftschluß ermöglicht, so daß eine Rißbildung infolge von Verspannungen zurückgedrängt werden kann. Weiterhin ist es nicht notwendig, Zusatzwerkstoffe in den Bereich der Schweißnaht einzubringen, so daß hier eine Materialeinsparung sowie Gewichtsreduktion gegeben ist. Zur Erhöhung der Steifigkeit können die Profilteile 12, 14 auch im Bereich der Stege 16, 17 verschweißt werden. Dazu ist an der Kreuzungsstelle (20) mindestens eine zu den Stegen (16), (17) parallele Verbindung, insbesondere durch eine Laserschweißnaht erzeugt, angeordnet ist, die die Stege 16 und 17 kraftschlüssig verbindet. Selbstverständlich kann das Fügen ganz oder teilweise auch weiterhin durch Handschweißen erfolgen. Insbesondere gilt dies für die vorgenannte, kraftschlüssige Verbindung zwischen den Stegen 16 und 17.

Die Figur 8 zeigt eine weitere Ausführungsform der Profilteile 12, 14 für die Tragestruktur 10. Beide Profilteile 12, 14 sind dabei in ihrem Querschnitt U-förmig ausgebildet. Das zweite Profilteil 14 kann über einen Gurt 50, beispielsweise mit einer Laserschweißnaht 52, auf einem Flächenelement 54 fixiert werden. Anschließend wird das erste Profilteil 12 im Bereich der korrespondierenden Ausnehmungen 22, 23 um 90° versetzt auf das Profilteil 14 gesetzt. Bedingt durch das hier U-förmige Profil erstreckt sich die Ausnehmung 26 in Längsrichtung in gleicher Höhe wie die Ausnehmung 22. Nach dem Ineinanderstecken werden - wie bereits erläutert - die beiden Profilteile 12, 14 durch Klebe-, Lötoder Schweißverfahren miteinander gefügt.

### Bezugszeichenliste

- 10: Tragstruktur
- 12: erstes Profilteil
- 14: zweites Profilteil
- 16: Steg
- 17: Steg
- 18: Gurt
- 19: Gurt
- 20: Kreuzungsstelle
- 22: schlitzartige Ausnehmung
- 23: rechteckförmige Ausnehmung
- 24: Übergangsbereich
- 25: Übergangsbereich
- 26: Ausnehmung
- 28: Nase
- 30: vorderes Ende
- 32: Fügekante
- 33: Fügekante
- 34: Biegelinie
- 36: Biegelinie
- 38: Schlitz
- 40: Gurt
- 42: Erweiterung
- 44: Flachwerkstück
- 46: Spalt
- 47: Spalt
- 48: äußeres Ende des Gurtes 18
- 50: Gurt
- 52: Laserschweißnaht
- 54: Flächenelement
- d1: Breite des Gurtes 18 des ersten Profilteiles 12
- d2: Breite der Ausnehmung 23 des Gurtes 19
- d3: Breite der Ausnehmung 22 des Profilteils 12
- d4: Materialdicke des Profilteils 14
- →: Biegewinkel

## Patentansprüche

1. Tragstruktur (10) mit wenigstens zwei sich kreuzenden Profilteilen (12,14), insbesondere für Untergestelle und Aufbauten von Schienenfahrzeugen, wobei die Profilteile jeweils einen Steg (16,17) und wenigstens einen entlang einer Biegelinie aus einer Ebene des Steges abgewinkelten Gurt (18,19,40) aufweisen und an wenigstens einer Kreuzungsstelle (20) die Profilteile korrespondierende Ausnehmungen (22,23) für eine Steckverbindung der Profilteile zu der Tragstruktur aufweisen, **dadurch gekennzeichnet, daß** an der wenigstens einen Kreuzungsstelle (20) im Übergangsbereich (24) vom Steg (16) zu dem wenigstens einen Gurt (18) eines ersten Profilteils (12) zur Ausbildung einer Nase (28) eine Ausnehmung (26) ausgebildet ist, wobei ein vorderes Ende (30) der Nase (28) sich zumindest bereichsweise parallel zu einer Fügekante (32) eines Gurtes (19, 40) eines zweiten Profilteils (14) erstreckt.

2. Tragstruktur nach Anspruch 1, **dadurch gekennzeichnet, daß** die Ausnehmung (26) eine hantelförmige Kontur mit an ihren Enden vorzugsweise kreisförmigen Erweiterungen (42) aufweisen.

3. Tragstruktur nach einem der vorhergehenden Ansprüche, **dadurch gekennzeichnet, daß** die Profilteile (12, 14) eine L-, T- oder U-förmige Kontur aufweisen.

4. Tragstruktur nach Anspruch 3, **dadurch gekennzeichnet, daß die** Ausnehmungen (22, 23) zur Ausbildung der Steckverbindung sich, ausgehend von einem Gurt (40), über einen Übergangsbereich (25) bis in den Steg (16, 17) erstrecken.

5. Tragstruktur nach Anspruch 4, **dadurch gekennzeichnet, daß** die Ausnehmungen (22, 23) im wesentlichen rechteckförmig sind und sich im Bereich des Steges (16, 17) in den Schlitz (38) verjüngen.

6. Tragstruktur nach einem der vorhergehenden Ansprüche, **dadurch gekennzeichnet, daß** eine Breite (d2) der Ausnehmung (23) im Bereich des Gurtes (19, 40) des zweiten Profilteils (14) einer Breite (d1) des Gurtes (18) des ersten Profilteils (12) entspricht.

7. Tragstruktur nach einem der vorhergehenden Ansprüche, **dadurch gekennzeichnet, daß** eine Breite (d3) der Ausnehmungen (22, 23) im Bereich des Schlitzes (38) mindestens einer Materialdicke (d4) der Profilteile (12, 14) entspricht.

8. Tragstruktur nach einem der vorhergehenden Ansprüche, **dadurch gekennzeichnet, daß** die Fügekante (32) des zweiten Profilteils (14) und das vordere Ende (30) der Nase (28) des ersten Profilteils (12) kraftschlüssig verbunden sind, insbesondere durch eine Laserschweißnaht.

9. Tragstruktur nach einem der vorhergehenden Ansprüche, **dadurch gekennzeichnet, daß** die der Fügekante (32) gegenüberliegende Fügekante (33) des Gurtes (40) des zweiten Profilteils (14) und das äußere Ende (48) des Gurtes (18) des ersten Profilteils (12) kraftschlüssig verbunden sind, insbesondere durch eine Laserschweißnaht.

10. Tragstruktur nach einem der vorhergehenden Ansprüche, **dadurch gekennzeichnet, daß** an der Kreuzungsstelle (20) mindestens eine zu den Stegen (16) und (17) parallele, kraftschlüssige Verbindung, insbesondere durch eine Laserschweißnaht erzeugt, angeordnet ist, die die Stege (16) und (17) kraftschlüssig verbindet.

## Claims

1. Supporting structure (10) with at least two intersecting profiled parts (12, 14), in particular for sub-frames and bodies of rail vehicles, wherein the profiled parts in each case exhibit a web (16, 17) and at least one flange (18, 19, 40) angled along a bending line out of a plane of the web, and in at least one intersection location (20) the profiled parts exhibit corresponding recesses (22, 23) for plug-in connection of the profiled parts to form the supporting structure, **characterised in that** a recess (26) is formed in the at least one intersecting location (20) in the transitional area (24) from the web (16) to the at least one flange (18) of a first profiled part (12) to form a nose (28), a front end (30) of the nose (28) extending, at least in areas, parallel to a joining edge (32) of a flange (19, 40) of a second profiled part (14).

2. Supporting structure according to claim 1, **characterised in that** the recess (26) exhibits a dumbbell-shaped contour with preferably circular widenings (42) at its ends.

3. Supporting structure according to one of the preceding claims, **characterised in that** the profiled parts (12, 14) exhibit an L-shaped, T-shaped or U-shaped contour.

4. Supporting structure according to claim 3, **characterised in that** the recesses (22, 23) for forming the plug-in connection extend from a flange (40), via a transitional area (25) into the web (16, 17).

5. Supporting structure according to claim 4, **characterised in that** the recesses (22, 23) are essentially rectangular in shape and in the area of the web (16, 17) taper into the slot (38).

6. Supporting structure according to one of the preceding claims, **characterised in that** a breadth (d2) of the recess (23) in the area of the flange (19, 40) of the second profiled part (14) corresponds to a breadth (d1) of the flange (18) of the first profiled part (12).

7. Supporting structure according to one of the preceding claims, **characterised in that** a breadth (d3) of the recesses (22, 23) in the area of the slot (38) corresponds at least to a material thickness (d4) of the profiled parts (12, 14).

8. Supporting structure according to one of the preceding claims, **characterised in that** the joining edge (32) of the second profiled part (14) and the front end (30) of the nose (28) of the first profiled part (12) are connected together in a force-locking manner, in particular by a laser weld seam.

9. Supporting structure according to one of the preceding claims, **characterised in that** the joining edge (33) of the flange (40) of the second profiled part (14) lying opposite the joining edge (32) and the outer end (48) of the flange (18) of the first profiled part (12) are connected together in a force-locking manner, in particular by a laser weld seam.

10. Supporting structure according to one of the preceding claims, **characterised in that** in the intersecting location (20) there is at least one force-locking connection which is parallel to the webs (16) and (17), in particular produced by a laser weld seam, which connects the webs (16) and (17) in a force-locking manner.

## Revendications

1. Structure porteuse (10) comprenant au moins deux éléments profilés (12, 14) qui se croisent, en particulier pour des châssis et des carrosseries de véhicules ferroviaires, étant précisé que ces éléments profilés comportent chacun une aile (16, 17) et au moins un rebord (18, 19, 40) coudé à partir d'un plan de l'aile le long d'une ligne de pliage, et qu'au niveau d'au moins une intersection (20), les éléments profilés présentent des creux correspondants (22, 23) pour une liaison par emboîtement des éléments profilés en vue de former la structure porteuse, **caractérisée en ce qu'**il est prévu sur l'intersection ou les intersections (20), dans la zone de transition (24) entre l'aile (16) et le ou les rebords (18) d'un premier élément profilé (12), un creux (26) destiné à former une saillie (28), une extrémité avant (30) de la saillie (28) s'étendant au moins par zones parallèlement à un bord d'assemblage (32) d'un rebord (19, 40) d'un second élément profilé (14).

2. Structure porteuse selon la revendication 1, **caractérisée en ce que** le creux (26) présente un contour en forme d'haltère, avec à ses extrémités des élargissements (42) de préférence circulaires.

3. Structure porteuse selon l'une des revendications précédentes, **caractérisée en ce que** les éléments profilés (12, 14) présentent un contour en L, en T ou en U.

4. Structure porteuse selon la revendication 3, **caractérisée en ce que** les creux (22, 23) destinés à former la liaison par emboîtement s'étendent d'un rebord (40) jusqu'à l'aile (16, 17), en passant par une zone de transition (25).

5. Structure porteuse selon la revendication 4, **caractérisée en ce que** les creux (22, 23) sont sensiblement rectangulaires et vont en diminuant dans la zone de l'aile (16, 17) jusqu'à former la fente (38).

6. Structure porteuse selon l'une des revendications précédentes, **caractérisée en ce qu'**une largeur (d2) du creux (23) dans la zone du rebord (19, 40) du second élément profilé (14) correspond à une largeur (d1) du rebord (18) du premier élément profilé (12).

7. Structure porteuse selon l'une des revendications précédentes, **caractérisée en ce qu'**une largeur (d3) des creux (22, 23) dans la zone de la fente (38) correspond au moins à une épaisseur de matière (d4) des éléments profilés (12, 14).

8. Structure porteuse selon l'une des revendications précédentes, **caractérisée en ce que** le bord d'assemblage (32) du second élément profilé (14) et l'extrémité avant (30) de la saillie (28) du premier élément profilé (12) sont reliés par force, en particulier grâce à une soudure au laser.

9. Structure porteuse selon l'une des revendications précédentes, **caractérisée en ce que** le bord d'assemblage (33) du rebord (40) du second élément profilé (14) qui est opposé au bord d'assemblage (32) et l'extrémité extérieure (48) du rebord (18) du premier élément profilé (12) sont reliés par force, en particulier grâce à une soudure au laser.

10. Structure porteuse selon l'une des revendications précédentes, **caractérisée en ce qu'**il est prévu, au niveau de l'intersection (20), au moins une liaison par force parallèle aux ailes (16) et (17), qui est réalisée en particulier grâce à une soudure au laser et qui relie par force les ailes (16) et (17).
